# EUROPEAN PATENT SPECIFICATION

(11) **EP 0 458 611 B1**
(45) Date of publication and mention of the grant of the patent: **30.11.1994**
(21) Application number: 91304623.1
(22) Date of filing: 22.05.1991
(51) Int. Cl.: H02P 8/00

(54) **Motor control circuit**
Motorsteuerschaltung
Circuit de commande de moteur

(30) Priority: 22.05.1990 JP 130390/90
(43) Date of publication of application: 27.11.1991
(73) Proprietor: Oki Electric Industry Company, Limited, Tokyo 105 (JP)
(72) Inventor: Ito, Toshikazu, c/o Oki Electric Ind. Co., Ltd., Minato-ku, Tokyo (JP)
(74) Representative: Read, Matthew Charles

(56) References cited:
- DE-A- 3 011 719
- DE-A- 3 915 576
- US-A- 4 293 807
- US-A- 4 769 585

## Description

The present invention relates to a method of controlling a stepping motor and an apparatus for controlling a stepping motor.

In the case of driving a stepping motor requiring high holding torque, a high voltage is applied to phase windings of a stepping motor so that a rise time of an exciting or driving current to be supplied to the phase windings is reduced. In this case the high voltage need be changed to a low voltage or cut off when the rotor reaches a given position to prevent overheating of the stepping motor caused by the supply of overcurrent to the phase windings so that the driving current to be supplied to the phase windings need be suppressed.

US-A-4769585 discloses a method of controlling a stepping motor comprising the steps of producing an exciting signal for exciting a predetermined phase winding, producing an overdrive signal for the predetermined phase winding and supplying a drive current to the predetermined phase winding in dependence on the exciting signal and the overdrive signal, and an apparatus for controlling a stepper motor for producing control signals that control the drive current in individual phase windings of the motor, comprising an overdrive signal generator for producing overdrive signals means for producing exciting signals for exciting the phase windings, and control means for controlling said drive current in dependence on the exciting signals and overdrive signals.

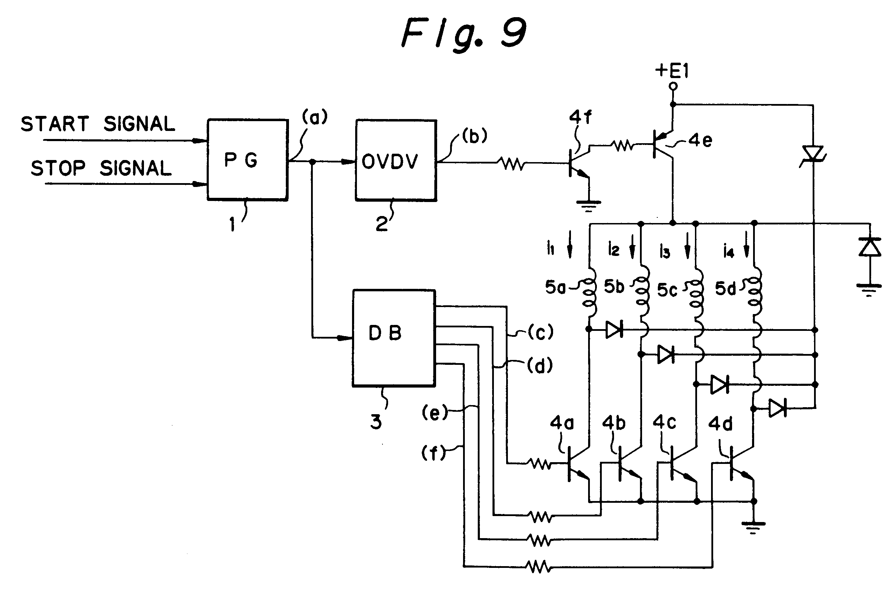

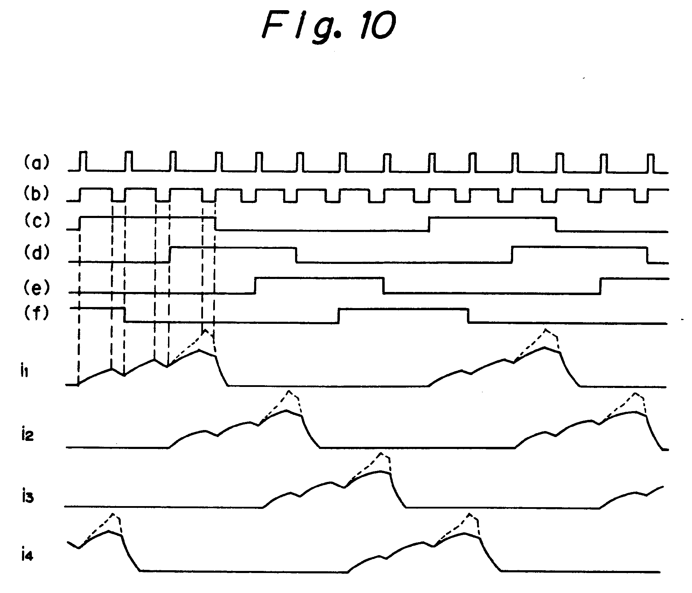

The method of controlling an overdrive type stepping motor of US-A-4769585 will be described in detail with reference to Figs. 9 and 10 in which Fig. 9 is the drive circuit and Fig. 10 is a timing chart showing an operation of the same circuit.

The drive circuit comprises a pulse generator 1 for generating a chain of pulses, an overdrive signal generator 2 for generating overdrive signals upon reception of the pulses, a distributing circuit 3 for producing exciting signals, transistors 4a to 4d for receiving phase exciting signals, a transistor 4e for receiving a power voltage +E1. The pulse generator 1 influences a speed of revolution of the stepping motor. Change of the pulse width of the overdrive signal (b) produced by the overdrive signal generator 2 influences the intensity of the driving current.

However, when the stepping motor is used to its performance limit in accordance with the above-mentioned stepping motor controlling method, a phase winding current rises up sharply at the trailing edge of the excitation due to a magnetic saturation, as shown in the broken lines in Fig. 10, thus resulting in large amount of heat from the stepping motor. In order to solve the problem by shortening the width of the overdrive signal (b), enough current cannot be supplied at the rising edge of the phase excitation, where the motor torque is decreased.

If the power voltage +E1 is high and unstable, the driving current is excessively supplied to the phase windings, thereby heating the motor while if the power voltage +E1 is low, the driving current does not supply sufficiently to the phase windings, thereby reducing the torque. To cope with this problem, a chopper type constant current drive circuit may be employed, but it will cause high manufacturing cost.

The present invention solves the problems of the conventional method of controlling a stepping motor and provides a method of controlling a stepping motor capable of eliminating generation of the overcurrent, torque reduction, increase of the cost even if the stepping motor operates at its maximum performance.

According to a first aspect of the present invention, there is provided a method, as defined with reference to US-A-4769585, characterised in that during a first stage of the supply of drive current, the overdrive signal comprises pulses having a first width and, during a second stage of the supply of drive current, the overdrive signal comprises pulses having a second width, wherein the first pulse width is less than the second pulse width and the second pulse width is such that the drive current is insufficient to produce overheating of the motor.

According to a second aspect of the present invention, there is provided an apparatus, as defined witn reference to US-A-4769585, characterised in that the overdrive signal generator is configured such that, during a first stage of the supply of drive current, the overdrive signals comprise pulses having a first width and, during a second stage of the supply of drive current, the overdrive signals) comprise pulses having a second width, wherein the first pulse width is less than the second pulse width and the second pulse width is such that the drive current is insufficient to produce overheating of the motor.

It is therefore an object of the present invention to provide a method of controlling a stepping motor by producing a plurality of control signals by combining selectively a plurality of overdrive signals and a plurality of exciting signals, each of said plurality of overdrive signals being formed of a pulse with a longer width at an earlier stage of a phase exciting duration during which a drive current flows in said stepping motor and a pulse with a shorter pulse width at a later stage of said phase exciting duration; and supplying a drive current in said stepping motor during said phase exciting duration in response to said control signal.

It is another object of the present invention to provide a method of controlling a stepping motor by producing a plurality of overdrive signals, each of the plurality of overdrive signals being formed of a pulse with a longer width at an earlier stage of a phase exciting duration during which a drive current flows in the stepping moto and a pulse with a shorter pulse width at a later stage of the phase exciting duration; and supplying a drive current in the stepping motor during the phase exciting duration in response to the overdrive signals.

The pulse widths of the overdrive signals may be compensated in accordance with the magnitude of the power voltage applied to the windings of the stepping motor. That is, the pulse width of the overdrive signal is short if the power voltage is high while it is long if the power voltage is low.

The pulse widths of the overdrive signals may be compensated in accordance with the speed of revolution of the stepping motor. That is, the pulse width of the overdrive signal is short if the speed of revolution is high while it is long if the speed of revolution is low.

With the arrangement of the drive circuit set forth above, it is possible to supply the drive current sufficiently to each of the phase windings at the rise time thereof and to reduce the drive current after the rise time.

Furthermore, it is possible to prevent a drive current from supplying excessively to the phase windings by shortening the pulse width when the power voltage or the speed of revolution is high and to assure the drive current by lengthening the pulse width when the power voltage or the speed of revolution is low by the operation of the compensating circuit.

Embodiments of the present invention will now be described, by way of example, with reference to Figures 1 to 8 of the accompanying drawings, in which:
Fig. 1 is a circuit diagram of a drive circuit for a stepping motor according to a first embodiment of the present invention;
Fig. 2 is a timing chart showing an operation of the circuit of Fig. 1;
Fig. 3 is a circuit diagram of an overdrive signal generator employed in the drive circuit of Fig. 1;
Fig. 4 is a timing chart showing an operation of the circuit of Fig. 3;
Fig. 5 is a circuit diagram of an overdrive signal generator employed in a drive circuit according to a second embodiment of the present invention;
Fig. 6 is a timing chart showing an operation of the circuit of Fig. 5;
Fig. 7 is a circuit diagram of a compensating circuit employed in a drive circuit according to a third embodiment of the present invention;
Fig. 8 is a timing chart showing an operation of the compensating circuit of Fig. 7;
Fig. 9 is a circuit diagram of a drive circuit for a stepping motor prior art; and
Fig. 10 is a timing chart showing an operation of the drive circuit of Fig. 9.

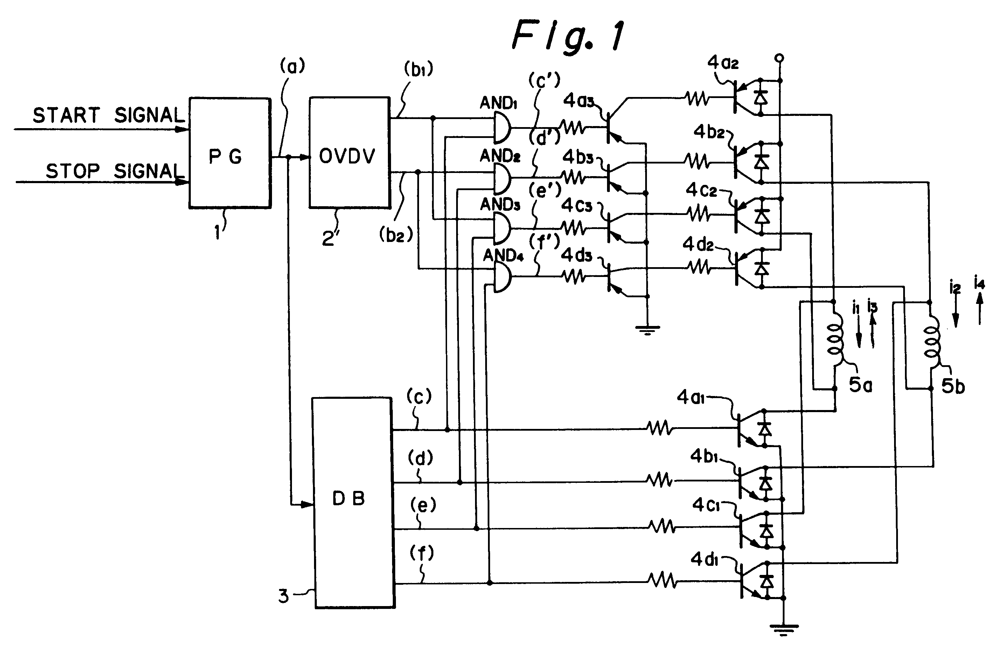

### First Embodiment (Figs. 1 to 4)

A bipolar stepping motor controlling method according to a first embodiment of the present invention will be described with reference to Figs. 1 to 4.

A drive circuit for controlling the stepping motor comprises, as illustrated in Fig. 1, a pulse generator 1 for receiving a start signal and producing a chain of pulse signals, an overdrive signal generator 2′ for receiving the pulse signal from the pulse generator 1 and producing overdrive signals, a distributing circuit 3 for receiving the pulse signal from the pulse generator 1 and producing phase exciting signals, AND gates AND1 to AND4 for receiving the overdrive signals from the overdrive signal generator 2′ at one input terminals thereof and the phase exciting signals from the distributing circuit 3 at the other input terminals thereof for carrying out the logical AND between the overdrive signals and the phase exciting signals and producing control signals (c′) to (f′) for turning on transistors 4a2 to 4d2 by way of transistors 4a3 to 4d3 for a given time and in a given sequence, transistors 4a1 to 4d1 for receiving the phase exciting signals, transistors 4a2 to 4d2 for selectively receiving a power voltage +E1 and phase windings 5a and 5b of the bipolar stepping motor. When the transistors 4a1 and 4a2 are turned on, the power voltage +E1 is supplied to the phase winding 5a so that an exciting current is flown in the direction of i1 while when the transistors 4c1 and 4c2 are turned on the exciting current is flown to the phase winding 5a in the direction of i3. Likewise, when the transistors 4b1 and 4b2 are turned on, the exciting current is flown to the phase winding 5b in the direction of i2 while when the transistors 4d1 and 4d2 are turned on, the exciting current is flown to the phase winding 5b in the direction of i4.

The drive circuit for the bipolar stepping motor starts operation when the pulse generator 1 produces the pulse signal (a) upon reception of the start signal. That is, when the bipolar stepping motor is driven by one-two alternate phase exciting system, the pulse signal (a) is supplied to the distributing circuit 3 which then selectively produces phase exciting signals (c) to (f) to the transistors 4a1 to 4d1, thereby turning on the transistors 4a1 to 4d1 at a given sequence.

The overdrive signals (b1) and (b2) are produced by the overdrive signal generator 2′ when the same generator 2′ receives the pulse signal (a) from the pulse generator 1, and go to H level so that the AND circuits AND1 to AND4 carry out the logical AND between the overdrive signals (b1) and (b2) and the phase exciting signals (c) to (f) and produce the control signals (c′) to (f′) which are supplied to the transistors 4a2 to 4d2 by way of the transistors 4a3 to 4d3. As a result, the transistors 4a2 to 4d2 are turned on for a given time in a given sequence, thereby supplying the power voltage +E1 to the phase windings 5a and 5b so that the forward or reverse exciting current flowing from the power voltage +E1 to the ground is supplied to the phase windings 5a and 5b.

The overdrive signal (b1) produced by the overdrive signal generator 2′ goes to H levels at the first two pulses for a duration of t_{w1} and next succeeding two pulses for a duration of t_{w2} according to the duration where the phase exciting signals (c) and (e) go to H level. Subsequently, the control signals (c′) and (e′) produced by the AND gates AND1 and AND3 go to H levels at the first two pulses for the duration of t_{w1} and at succeeding one pulse for the duration of t_{w2} during which the transistors 4a2 and 4c2 are turned on by way of the transistors 4a3 and 4c3 and the power volatge +E1 is supplied to the phase winding 5a.

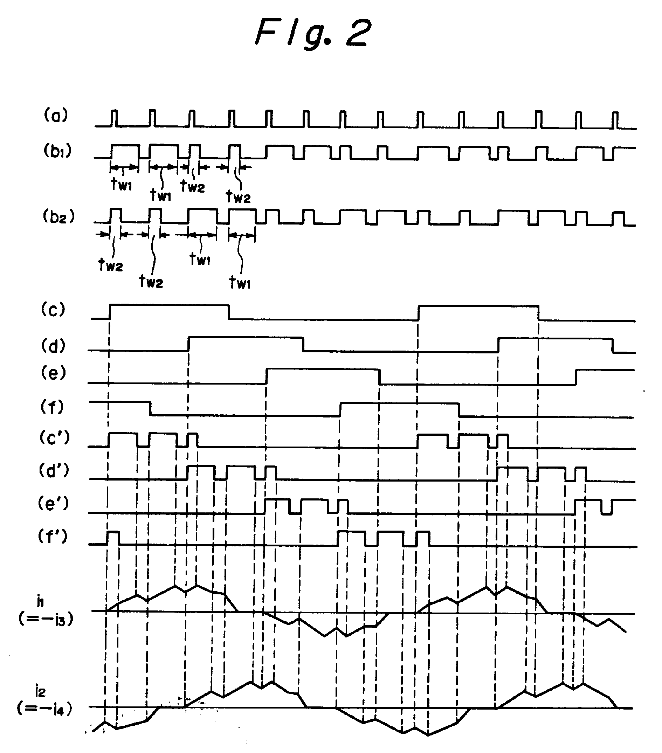

Likewise, the overdrive signal (b2) goes to H level at first two pulses for a duration of t_{w1} and at succeeding two pulses for a duration of t_{w2} in response to the duration where the phase exciting signals (d) and (f) go to H level. The control signals (d′) and (f′) produced by the AND gates AND2 and AND4 go to H level at first two pulses for the duration of t_{w1} and at a succeeding one pulse for the duration of t_{w2} during which the transistors 4b2 and 4d2 are turned on by way of the transistors 4b3 and 4d3 so that the power voltage +E1 is supplied to the phase winding 5b. As a result, the exciting or driving current is supplied to the phase winding 5a and 5b in the forward or reverse direction as illustrated in the arrows in Fig. 2 so that the stepping motor starts rotation.

Whereupon, the expression of t_{w1} > t_{w2} is established between the durations t_{w1} and t_{w2} of the overdrive signals and the duration t_{w1} is determined so that the current is supplied sufficiently at the leading edge of the exciting current while the duration t_{w2} is determined so that the current does not rise sharp at the trailing edge of the exciting current, whereby the reduction of the torque caused by the overheating of the stepping motor can be prevented.

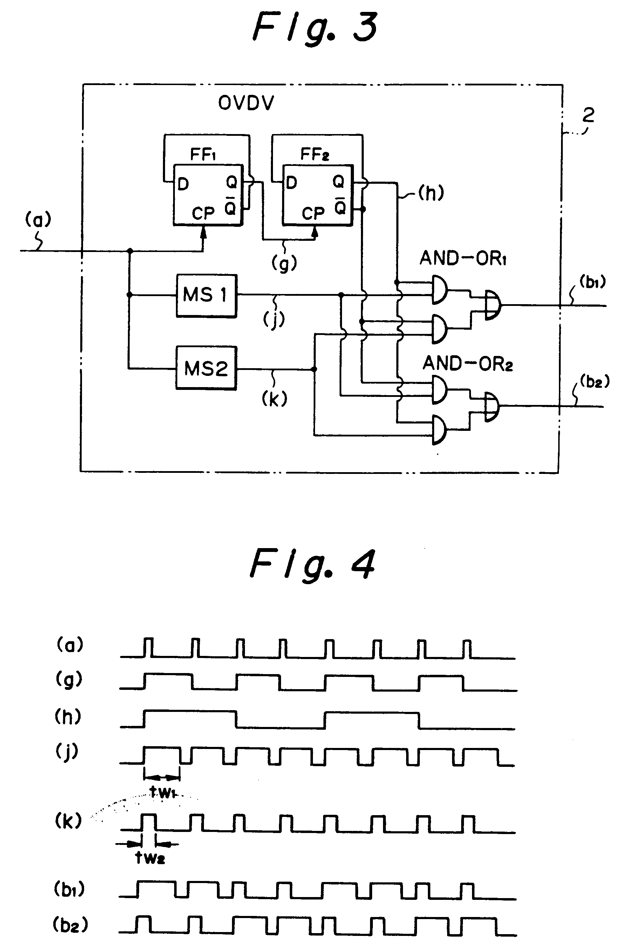

The overdrive signal generator 2′ will be described more in detail with reference to Figs. 3 and 4. The overdrive signal generator 2′ comprises D-type flip-flops FF1 and FF2 serving as a mod-4 counter for counting the pulse signal (a) each time the flip-flop FF1 receives the pulse signal (a) and producing output signals (g) and (h), and one-shot multivibrators MS1 and MS2 for producing output signals (j) and (k) of H level for a duration of t_{w1} and a duration of t_{w2} each time they receive the pulse signal (a) from the pulse generator 1 and AND-OR circuits AND-OR1 and AND-OR2 for switching the output signals (j) and (k) from the one-shot multivibrators MS1 and MS2 depending on the output signal (h) from the flip-flop FF2 for producing overdrive signals (b1) and (b2). That is, the overdrive signal (b1) produced by the AND-OR circuit AND-OR2 enables the one-shot multivibrator MS1 to produce the output signal (k) having the pulse width t_{w1} when the output signal (h) of the flip-flop FF2 goes to H level while enables the one-shot multivibrator MS2 to produce the output signal (j) having the pulse width t_{w2} when the output signal (h) of the flip-flop FF2 goes to L level while the overdrive signal (b2) produced by the AND-OR circuit AND-OR2 enables the one-shot multivibrator MS2 to produce the output signal (k) having the pulse width t_{w2} when the output signal (h) of the flip-flop FF2 goes to H level while enables the one-shot multivibrator MS1 to produce the output signal (j) having the pulse width t_{w1} when the output signal (h) of the flip-flop FF2 goes to L level.

In such a manner, as shown in Fig. (2), an overdrive signal (b₁) and an overdrive signal (b₂) are output from the overdrive signal generator 2′, the overdrive signal (b₂) being shifted out of phase of 90 degrees with respect to the overdrive signal (b₁) during the phase exciting period. Then, phase signals (c′), (d′), (e′), (f′) acting as control signals are produced from the logic circuits AND1, AND2, AND3, AND4 by combining logically the phase exciting signals (c), (d), (e), (f) each of which is shifted by 90 degrees.

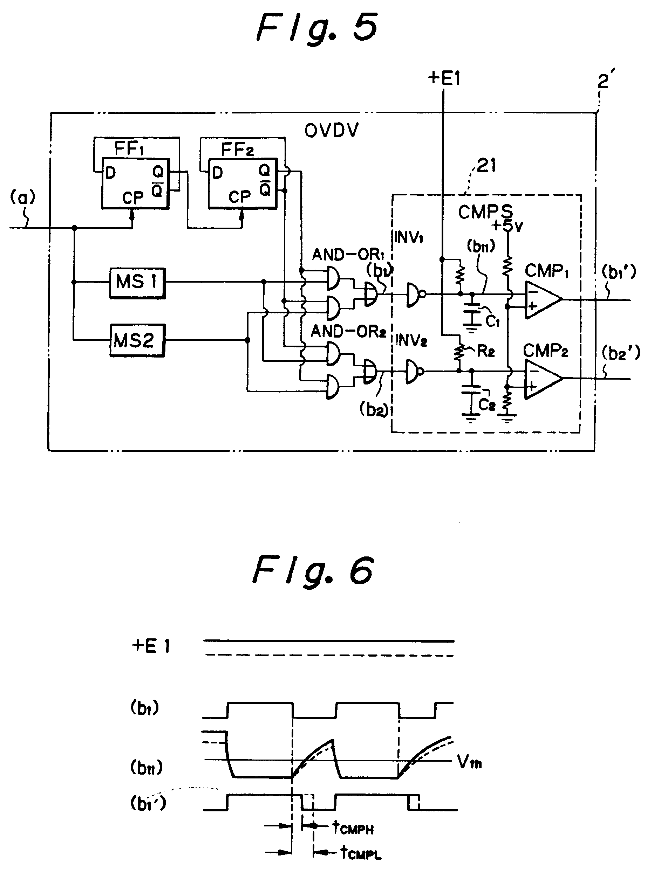

### Second Embodiment (Figs. 5 and 6):

A method of controlling a stepping motor according to a second embodiment of the present invention will be described with reference to Figs. 5 and 6.

A drive circuit for the stepping motor is substantially same as that of the first embodiment excepting that a compensating circuit is added to the overdrive signal generator of the first embodiment. The same and like components as those of the first embodiment are denoted at same numerals and the explanations thereof are omitted.

A compensating circuit CMPS21 is connected to the output sides of the AND-OR circuits AND-OR1 and AND-OR2. The compensating circuit CMPS 21 applies a compensation pulse to the pulse widths of the output signals (b1) and (b2) of AND-OR circuits AND-OR1 and AND-OR2 depending on high or low level of the power voltage +E1. If the power voltage +E1 is high the compensation pulse width is short while the power voltage +E1 is low the compensation pulse width is long.

Accordingly, the compensating circuit CMPS 21 comprises, as illustrated in Fig. 5, inverters INV1 and INV2 of open collectors for regulating the polarities of the output signals (b1) and (b2) of the AND-OR circuits AND-OR1 and AND-OR2, resistors R1 and R2 and capacitors C1 and C2 respectively arranged in series between the power voltage +E1 and the ground for delaying the rise time of the output signals (b11) of the inverters INV1 and INV2 depending on high or low level of the power voltage +E1.

The compensating circuit 21 operates as follows and comparators CMP1 and CMP2 for comparing the charged capacitance voltages of the capacitors C1 and C2 with a reference voltage.

When the pulse of the overdrive signal (b1) goes H level from L level, as illustrated in timing chart of Fig. 6, the output signal (b11) of the inverter INV1 goes L level from the H level so that the voltage of the output signal (b11) becomes lower than a given reference voltage Vₜₕ applied to a noninverting input of a comparator CMP1 so that an output signal (b1′) produced by the comparator CMP1 goes H level. If the overdrive signal (b1) goes L level from H level, the output of the inverter INV1 goes H level from L level. In this case, when a charged capacitance voltage of the capacitor C1 connected to the power voltage +E1 by way of the resistor R1 increases exponentially as illustrated in Fig. 6 as the output signal (b11) and in due time becomes higher than the reference voltage Vₜₕ applied to the noninverting input of the comparator CMP1, the output signal (b1′) of the comparator circuit CMP1 goes L level. That is, the compensation pulse t_{CMPL} is added to the output signal (b1′) of the comparator CMP1 by provision of the comansating circuit CMPS 21 as illustrated in solid line in Fig. 6.

If the power voltage +E1 is low, the leading edge of the charged capacitance voltage applied to the output signal (b11) becomes gentle as illustrated in broken line in Fig. 6 so that the compensation pulse t_{CMPL}, which is longer in the pulse width than the compensation pulse t_{CMPH}, is applied to the output signal (b1′) of the comparator circuit CMP1.

Likewise, the provision of the compensating circuit CMPS 21 influences the overdrive signal (b2).

As a result, even if the power voltage is supplied by an unstable power supply, the driving exciting current to be supplied to the phase windings of the stepping motor is controlled under appropriate suppressed value depending on the power voltage, thereby preventing the reduction of the torque caused by the overheating of the stepping motor.

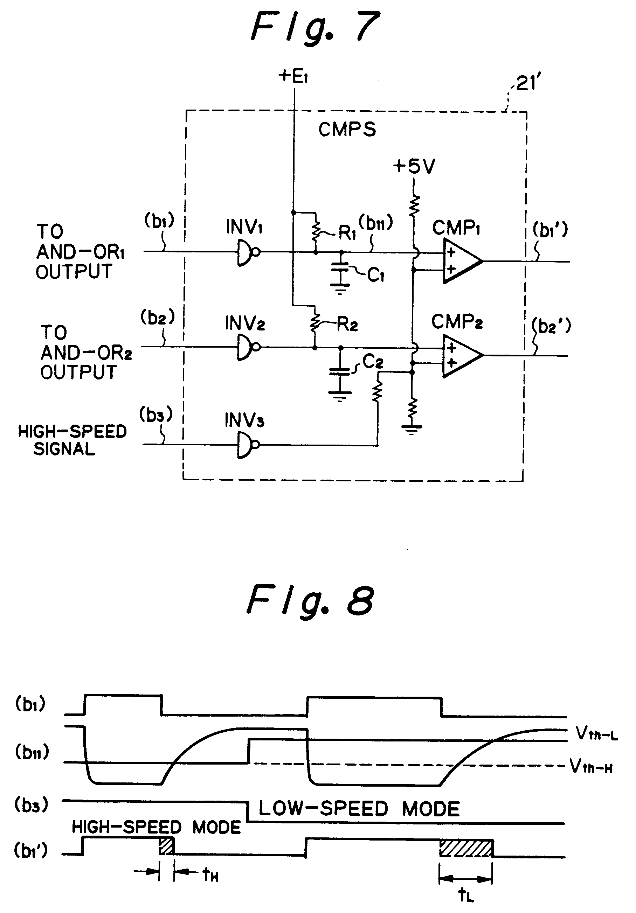

### Third embodiment (Figs. 7 and 8)

A method of driving a stepping motor according to a third embodiment of the present invention will be described with reference to Figs. 7 and 8.

A drive circuit for the stepping motor is substantially the same as that of the second embodiment excepting that the compensating circuit further includes a third inverter INV3 connected to the noninverting inputs of the comparators CMP1 and CMP2 for switching the given reference voltage Vₜₕ to be applied to the noninverting inputs thereof depending on the speed of rotation of the stepping motor.

If a high-speed mode instruction signal (b3) having H level is applied from a control unit, not shown, to the inverter INV3, the reference voltage to be applied to both the comparators CMP1 and CMP2 is lowered to the value V_{th-H} to thereby shorten the pulse width of the compensation pulse t_{H} to be added to the output signals (b1′) and (b2′) while if the high-speed mode instruction, (b3) having low level is applied to the inverter INV3, the reference voltage is increased to the value V_{th-L} to thereby lengthen the pulse width of the compensation pulse t_{L}. Accordingly, it is possible to vary the compensation pulse to an appropriate value when the power voltage +E1 is supplied from the unstable power supply, thereby preventing the reduction of the torque caused by the overheating of the stepping motor.

Although the invention has been described in its preferred form with a certain degree of particularity, it is to be understood that many variations and changes are possible in the invention without departing from the scope of the claims.

In another embodiment according to the present invention, the overdrive signals (b₁) and (b₂) may be input directly to the drive circuit without using the logic circuit comprising the AND gates which receives the exciting signals. In this case, the overdrive signal generator is designed so as to produce an overdrive signal containing a pulse with a longer width at an earlier stage of a pulse exciting duration during which a drive current flows in a phase winding of the stepping motor and a pulse with a shorter pulse width at a later stage of said exciting duration. Such a circuit configuration is suited to control unipolar stepping motors.

With the arrangement set forth above, it is possible to supply the sufficient amount of the driving current to each phase winding at the rise time thereof and supply the small amount of the driving current to each winding after the rise time thereof, thereby preventing the reduction of the torque caused by the overheating of the stepping motor.

In this case, it is possible to reduce the generation of heat if the desired torque need be constant and increase the torque to be obtained if the consumption power need be constant since the stepping motor is composed of the bipolar stepping motor.

The pulse widths of the overdrive signals are compensated according to the level of the power voltage for driving the stepping motor. That is, when the power voltage is high, the pulse widths of the driving signals are shortened to prevent the overcurrent while the pulse widths of the driving signals are lengthened to assure the satisfactory driving current. Even if the power voltage is supplied from the unstable power supply, it is possible to maintain the driving current to be supplied to the phase windings at an appropriate value.

It is also possible to switch the compensation pulse to be added to the pulse width of the overdrive signal at least two stages depending on the speed of rotation of the stepping motor, that is, to switch the compensation pulse having short pulse width in case the speed of revolution is high and to switch the compensation pulse having long pulse width in case the speed of revolution is low. Accordingly, it is possible to regulate the compensation pulse at an appropriate value depending on the speed of revolution of the stepping motor even if the power voltage is supplied by the unstable power supply.

## Claims

1. A method of controlling a stepping motor comprising the steps of producing an exciting signal (c,d,e,f) for exciting a predetermined phase winding (5a,5b), producing an overdrive signal (c′,d′,e′,f′) for the predetermined phase winding and supplying a drive current to the predetermined phase winding (5a,5b) in dependence on the exciting signal (c,d,e,f) and the overdrive signal (c′,d′,e′,f′), **characterized in that**, during a first stage of the supply of drive current, the overdrive signal (c′,d′,e′,f′) comprises pulses having a first width (tw1) and, during a second stage of the supply of drive current, the overdrive signal (c′,d′,e′,f′) comprises pulses having a second width (tw2), wherein the first pulse width (tw1) is less than the second pulse width (tw2) and the second pulse width (tw2) is such that the drive current is insufficient to produce overheating of the motor.

2. A method according to claim 1, comprising the step of controlling the pulse widths (tw1,tw2) of the overdrive signal in dependence on a power supply voltage (+E1), applied to the motor, to regulate the torque of the motor.

3. A method according to claim 1 or 2, comprising the step of controlling the pulse widths (tw1,tw2) of the overdrive signal in dependence on the speed of the motor to regulate the torque of the motor.

4. An apparatus for controlling a stepper motor for producing control signals that control the drive current in individual phase windings (5a,5b) of the motor, comprising an overdrive signal generator (1) for producing overdrive signals (c′,d′,e′,f′), means (3) for producing exciting signals (c,d,e,f) for exciting the phase windings, and control means (4) for controlling said drive current in dependence on the exciting signals (c,d,e,f) and overdrive signals (c′,d′,e′,f′), **characterized in that** the overdrive signal generator (1) is configured such that, during a first stage of the supply of drive current, the overdrive signals (c′,d′,e′,f′) comprise pulses having a first width (tw1) and, during a second stage of the supply of drive current, the overdrive signals (c′,d′,e′,f′) comprise pulses having a second width (tw2), wherein the first pulse width (tw1) is less than the second pulse width (tw2) and the second pulse width (tw2) is such that the drive current is insufficient to produce overheating of the motor.

5. An apparatus according to claim 4, wherein the overdrive signal generating means (1) is responsive to a power supply voltage (+E1), applied to the motor, to regulate the torque of the motor by controlling the pulse widths (tw1,tw2) of the overdrive signals.

6. An apparatus according to claim 4 or 5, wherein the overdrive signal generating means (1) is responsive to the speed of the motor to regulate the torque of the motor by controlling the pulse widths (tw1,tw2) of the overdrive signals.

## Patentansprüche

1. Verfahren zum Steuern eines Schrittmotors, das folgende Schritte aufweist: Erzeugen eines Erregersignals (c, d, e, f) zum Erregen einer vorbestimmten Phasenwicklung (5a, 5b), Erzeugen eines Übersteuerungssignals (c′, d′, e′, f′) für die vorbestimmte Phasenwicklung, und Zuführen eines Antriebsstroms zu der vorbestimmten Phasenwicklung (5a, 5b) in Abhängigkeit von dem Erregersignal (c, d, e, f) und dem Übersteuerungssignal (c′, d′, e′, f′), **dadurch** **gekennzeichnet, daß** während einer ersten Stufe der Zufuhr des Antriebsstroms das Übersteuerungssignal (c′, d′, e′, f′) Impulse umfaßt, die eine erste Breite (tw1) haben, und während einer zweiten Stufe der Zufuhr eines Antriebsstroms das Übersteuerungssignal (c′, d′, e′, f′) Impulse umfaßt, die eine zweite Breite (tw2) haben, wobei die erste Impulsbreite (tw1) geringer als die zweite Impulsbreite (tw2) ist, und die zweite Impulsbreite (tw2) derart ist, daß der Antriebsstrom unzureichend ist, um ein Überhitzen des Motors zu erzeugen.

2. Verfahren nach Anspruch 1, das den Schritt zum Steuern der Impulsbreiten (tw1, tw2) des Übersteuerungssignals in Abhängigkeit von einer Leistungsversorgungsspannung (+E1) aufweist, die an den Motor angelegt wird, um das Drehmoment des Motors zu regeln.

3. Verfahren nach Anspruch 1 oder 2, das den Schritt zum Steuern der Impulsbreiten (tw1, tw2) des Übersteuerungssignals in Abhängigkeit von der Geschwindigkeit des Motors aufweist, um das Drehmoment des Motors zu regeln.

4. Gerät zum Steuern eines Schrittmotors zum Erzeugen von Steuersignalen, die den Antriebsstrom in einzelnen Phasenwicklungen (5a, 5b) des Motors steuern, wobei das Gerät folgendes aufweist: einen Übersteuerungssignal-Generator (1) zum Erzeugen von Übersteuerungssignalen (c′, d′, e′, f′), eine Einrichtung (3) zum Erzeugen von Erregersignalen (c, d, e, f) zum Erregen der Phasenwicklungen, und eine Steuereinrichtung (4) zum Steuern des Antriebsstroms in Abhängigkeit von den Erregersignalen (c, d, e, f) und Übersteuerungssignalen (c′, d′, e′, f′), **dadurch gekennzeichnet, daß** der Übersteuerungssignal-Generator (1) derart aufgebaut ist, daß während einer ersten Stufe der Zufuhr eines Antriebsstroms die Übersteuerungssignale (c′, d′, e′, f′) Impulse umfassen, die eine erste Breite (tw1) haben, und während einer zweiten Stufe der Zufuhr eines Antriebsstroms die Übersteuerungssignale (c′, d′, e′, f′) Impulse umfassen, die eine zweite Breite (tw2) haben, wobei die erste Impulsbreite (tw1) geringer als die zweite Impulsbreite (tw2) ist, und die zweite Impulsbreite (tw2) derart ist, daß der Antriebsstrom unzureichend ist, um ein Überhitzen des Motors zu erzeugen.

5. Gerät nach Anspruch 4, wobei die Übersteuerungssignal-Erzeugungseinrichtung (1) auf eine Leistungsversorgungsspannung (+E1) antwortet, die an den Motor angelegt wird, um das Drehmoment des Motors durch Steuern der Impulsbreiten (tw1, tw2) der Übersteuerungssignale zu regeln.

6. Gerät nach Anspruch 4 oder 5, wobei die Übersteuerungssignal-Erzeugungseinrichtung (1) auf die Geschwindigkeit des Motors antwortet, um das Drehmoment des Motors durch Steuern der Impulsbreiten (tw1, tw2) der Übersteuerungssignale zu regeln.

## Revendications

1. Un procédé de commande d'un moteur pas à pas comprenant les étapes qui consistent à produire un signal d'excitation (c, d, e, f) pour exciter un enroulement de phase prédéterminé (5a, 5b), à produire un signal de suralimentation (c′, d′, e′, f′) pour l'enroulement de phase prédéterminée et à appliquer un courant d'attaque à l'enroulement de phase prédéterminé (5a, 5b) sous la dépendance du signal d'excitation (c, d, e, f) et du signal de suralimentation (c′, d′, e′, f′), caractérisé en ce que, pendant un premier stade de l'application du courant d'attaque, le signal de suralimentation (c′, d′, e′, f′) est formé par des impulsions ayant une première largeur (tw1) et, pendant un second stade de l'application du courant d'attaque, le signal de suralimentation (c′, d′, e′, f′) est formé par des impulsions ayant une seconde largeur (tw2), la première largeur d'impulsion (tw1) étant inférieure à la seconde largeur d'impulsion (tw2), et la seconde largeur d'impulsion (tw2) étant telle que le courant d'attaque soit insuffisant pour produire un échauffement excessif du moteur.

2. Un procédé selon la revendication 1, comprenant l'étape qui consiste à commander les largeurs d'impulsion (tw1, tw2) du signal de suralimentation sous la dépendance d'une tension d'alimentation (+E1) qui est appliquée au moteur, pour réguler le couple du moteur.

3. Un procédé selon la revendication 1 ou 2, comprenant l'étape qui consiste à commander les largeurs d'impulsion (tw1, tw2) du signal d'attaque sous la dépendance de la vitesse du moteur, pour réguler le couple du moteur.

4. Un dispositif pour commander un moteur pas à pas, destiné à produire des signaux de commande qui commandent le courant d'attaque dans des enroulements de phase individuels (5a, 5b) du moteur, comprenant un générateur de signaux de suralimentation (1) destiné à produire des signaux de suralimentation (c′, d′, e′, f′), des moyens (3) pour produire des signaux d'excitation (c, d, e, f′) pour exciter les enroulements de phase, et des moyens de commande (4) pour commander le courant d'attaque sous la dépendance des signaux d'excitation (c, d, e, f) et des signaux de suralimentation (c′, d′, e′, f′), caractérisé en ce que le générateur de signaux de suralimentation (1) a une configuration telle que, pendant un premier stade de l'application du courant d'attaque, les signaux de suralimentation (c′, d′, e′, f′) sont formés par des impulsions ayant une première largeur (tw1) et, pendant un second stade de l'application du courant d'attaque, les signaux de suralimentation (c′, d′, e′, f′) sont constitués par des impulsions ayant une seconde largeur (tw2), la première largeur d'impulsion (tw1) étant inférieure à la seconde largeur d'impulsion (tw2), et la seconde largeur d'impulsion (tw2) étant telle que le courant d'attaque soit insuffisant pour produire un échauffement excessif du moteur.

5. Un dispositif selon la revendication 4, dans lequel les moyens de génération de signaux de suralimentation (1) réagissent à une tension d'alimentation (+E1), appliquée au moteur, en régulant le couple du moteur par la commande des largeurs d'impulsion (tw1, tw2) des signaux de suralimentation.

6. Un dispositif selon la revendication 4 ou 5, dans lequel les moyens de génération de signaux de suralimentation (1) réagissent à la vitesse du moteur de façon à réguler le couple du moteur par la commande des largeurs d'impulsion (tw1, tw2) des signaux de suralimentation.
